# EUROPÄISCHE PATENTSCHRIFT

(11) **EP 1 886 095 B1**
(45) Veröffentlichungstag und Bekanntmachung des Hinweises auf die Patenterteilung: **18.09.2013**
(21) Anmeldenummer: 06721909.7
(22) Anmeldetag: 12.04.2006
(51) Int. Cl.: G01D 5/22, B62D 5/04, B62D 15/02

(54) **DREHWINKELSENSOR**
ROTATIONAL ANGLE SENSOR
CAPTEUR D'ANGLE DE ROTATION

(30) Priorität: 19.05.2005 CH 868052005
(43) Veröffentlichungstag der Anmeldung: 13.02.2008
(73) Patentinhaber: ThyssenKrupp Presta Aktiengesellschaft, 9492 Eschen (LI)
(72) Erfinder: BATTISTI, Christoph, A-6700 Bludenz (AT)
(74) Vertreter: Troesch Scheidegger Werner AG
(86) Internationale Anmeldenummer: PCT/CH2006/000207
(87) Internationale Veröffentlichungsnummer: WO 2006/122436

(56) Entgegenhaltungen:
- EP-A- 1 493 648
- US-A- 4 808 958
- US-A- 6 065 561
- US-B1- 6 404 184

## Beschreibung

Die Erfindung bezieht sich auf einen Drehwinkelsensor koaxial angeordnet an einer drehbaren Welle nach Oberbegriff des Anspruch 1, sowie auf ein Verfahren zur Herstellung eines Drehwinkelsensor nach Anspruch 13 und ein Verfahren zur Messung eines Drehwinkels nach Anspruch 14 bis 16.

Der Erfindungsgegenstand befasst sich mit einer Drehwinkelsensoranordnung zur exakten Messung des Drehwinkels einer Welle, welche einfach, kompakt und wirtschaftlich zu realisieren ist bei hoher Zuverlässigkeit. Solche Drehwinkelsensoren werden insbesondere benötigt zur sensiblen Absolutwinkelmessung des Lenkeinschlages bei einer Lenkvorrichtung für Motorkraftfahrzeuge.

Im Stand der Technik sind Vorrichtungen zur Messung eines Drehwinkels an Wellen und insbesondere bei Lenkvorrichtungen bereits auf vielfältige Art und Weise realisiert worden. Ein Ausführungsbeispiel einer Drehwinkelmessanordnung für Lenkvorrichtungen ist beispielsweise aus der EP 1 493 648 A2 bekannt. Bei der dort vorgestellten Vorrichtung weist die Lenkspindel ein Aussengewinde auf, auf dem eine Mutter aufschraubbar angeordnet ist, welche durch eine Drehbewegung der Lenkspindel sich linear in Längsrichtung der Spindel bewegt. Auf der Mutter ist ein Permanentmagnet befestigt, der sich mit der Mutter somit in axialer Wellenrichtung bewegt. Diese Bewegung des Permanentmagneten wird hierbei über einen magnetoresistiven Sensor erfasst und es lässt sich so über die Position des Magneten zum magnetoresistiven Sensor ein Rückschluss auf den absoluten Drehwinkel ziehen.

Aus der Patentschrift US 6,404,184 ist ein Linearer Variabler Differential Transducer (LVDT) bekannt geworden welcher ein elektrisches Signal proportional zu einer Verschiebungsbewegung erzeugt. Die längsverschiebliche Bewegung eines stabförmigen Ankers aus ferromagnetischem Material wird durch mehrere Spulen, die den Anker umschliessen, über die Beeinflussung des Magnetfeldes erfasst und es wird daraus, entsprechend der Ankerbewegung, ein Signal erzeugt. Die Patentschrift US 4,808,958 beschreibt eine weitere LVDT - Anordnung. Hierbei wird ebenfalls die Längsverschiebung eines stabförmigen Ankers mit elektromagnetischen Mitteln erfasst. Die Spulen umschliessen den Anker und bilden eine Transformatoranordnung mit einer Primärwicklung und mit zwei darüber angeordneten Sekundärwicklungen. Je nach Lage des Ankers innerhalb den Wicklungen wird die Kopplung der Wicklungen verändert und ein entsprechendes Signal erzeugt. Mit dieser Wicklungsanordnung soll eine gute Linearität des Ausgangssignals ermöglicht werden.

In der Patentschrift US 6,065,561 wird eine Fahrzeuglenkvorrichtung beschrieben mit einer kontrollierten Rückstellung der Radposition. Die Lenkwelle trägt eine Schneckengewinde mit einer Kugelumlaufspindel, die wenn sie axial verschoben wird eine Verdrehung der Lenkwelle bewirkt. Beidseits der Spindel sind Kolben angeordnet welche mit der Spindel gekoppelt sind. Die Anordnung ist in einem Zylindergehäuse untergebracht und die Kolben gleiten dichtend entlang der inneren Zylinderwand. An beiden Enden des Zylindergehäuses ist je eine Kammer vorgesehen, die mit Pressluft gespiesen werden können, wodurch die axiale Lage der Kolben verschoben wird, um über die Spindel eine Drehbewegung auf die Lenkwelle für die Rückstellung zu bewirken.

Bekannt sind ausserdem Messverfahren, die neben dem erwähnten magnetischen Verfahren auf optischen, induktiven oder kapazitiven Messverfahren beruhen. Den bisher bekannten Verfahren ist gemeinsam, dass eine einbaugünstige, absolute Lenkwinkelmessung mit kostengünstigem und modularem, kompaktem Aufbau bis anhin nur bedingt realisierbar war.

Die Aufgabe der vorliegenden Erfindung liegt darin, die Nachteile des vorerwähnten Standes der Technik zu beseitigen. Insbesondere besteht die Aufgabe darin, einen Drehwinkelsensor zur Erfassung eines Drehwinkels an einer Welle zu realisieren, welcher äusserst kompakt aufgebaut ist und eine sensible und einfache Absolutwinkelmessung ermöglicht bei einfachem und wirtschaftlichem Aufbau. Weiter besteht die Aufgabe der vorliegenden Erfindung darin, ein Messsystem bereitzustellen, bei dem sich Fertigungstoleranzen und Temperaturschwankungen möglichst wenig auf die Messgenauigkeit auswirken.

Die Aufgabe wird erfindungsgemäss durch die Anordnung nach Anspruch 1 gelöst, sowie nach dem Verfahren zur Herstellung eines Drehwinkels nach Anspruch 13 und einem Messverfahren nach Anspruch 14. Die abhängigen Ansprüche definieren weitere vorteilhafte Ausführungsformen.

Die Aufgabe wird erfindungsgemäss dadurch gelöst, dass der Drehwinkelsensor koaxial angeordnet an einer drehbaren Welle ist und die Welle einen Aussengewindeabschnitt aufweist mit einer auf diesen in Wellenachsrichtung beweglich angeordneten Gewindemutter, welche koaxial von einem bevorzugt drehfest bezüglich der Welle stehenden Gehäuse umfasst werden, wobei die Gewindemutter gegenüber dem Gehäuse verdrehsicher angeordnet ist, wobei das Gehäuse in Richtung der Wellenachse mindestens zwei die Welle umschliessende ringförmige Aussparungen aufweist, welche je eine elektrische Wicklung enthalten und dass das Gehäuse zwei innere gegen die Welle gerichtete ringförmige Gehäuseteile aufweist, die .die Wicklungen mindestens teilweise nicht überdecken, wobei mindestens ein Teil der Gewindemutter zwischen dem Gehäuseteilen derart angeordnet ist, dass zwischen den Gehäuseteilen und der Gewindemutter beidseitig je ein in der Breite varierbarer Luftspalt ausgebildet ist. Die Gewindemutter ist hierbei vorzugsweise mindestens teilweise aus einem Metall. Durch Verdrehen der Welle wird die Gewindemutter auf diese Art entlang der Welle eine lineare Bewegung ausführen. Die Drehbewegung wird dadurch in eine translatorische Bewegung der Gewindemutter umgesetzt. Die Gewindemutter nimmt hierbei eine unterschiedliche Position gegenüber den örtlich feststehenden Spulen der Wicklungen ein, wodurch die Induktivität der Spulen entsprechend variiert wird und diese mit entsprechender Messelektronik ausgewertet werden kann und hierdurch, durch entsprechendes Kalibrieren der Anordnung, ein Drehwinkel zugeordnet werden kann.

Besonders effektiv wird die Anordnung, wenn mindestens ein Teil der Gewindemutter und ein Teil des Gehäuses oder das ganze Gehäuse, welche im magnetischen Kreis der Wicklungsanordnung liegen aus ferromagnetischem oder auch aus ferrimagnetischem Material bestehen. Durch die Verschiebung der Gewindemutter wird hierbei die Luftspaltbreite variiert und es kann ein effektives Messsignal erzeugt und erfasst werden.

Bei der vorliegenden Anordnung wird beim Verschieben der Gewindemutter auf der einen Seite der Luftspalt vergrössert während gleichzeitig auf der anderen Seite der zweite Luftspalt verringert wird. Durch die gegenläufige Wirkung der beiden dadurch gebildeten magnetischen Messkreise können bei entsprechender elektronischer Auswertung der Messsignale hohe Signalpegel erreicht werden, wodurch präzise und sensibel auch sehr hohe Drehwinkelauflösungen noch gemessen werden können und gleichzeitig werden durch die gegenläufige und fest gekoppelte Doppelmesseinrichtung auftretende Ungenauigkeiten wie Spiel, Temperaturshift im Messkreis, Temperaturausdehnungen mechanischer Art etc. kompensiert. Hierdurch werden die Aufwendungen für die Herstellung und die Montage geringer gehalten bei hoher erzielter Präzision der Messvorrichtung.

Die Erfindung wird nun nachfolgend beispielsweise und mit schematischen Figuren näher erläutert. Es zeigen:
- Fig. 1: eine erfindungsgemässe Anordnung eines Drehwinkelsensors mit Welle schematisch und im Längsschnitt
- Fig. 2: eine zweite Ausführungsform analog der Anordnung nach Fig. 1

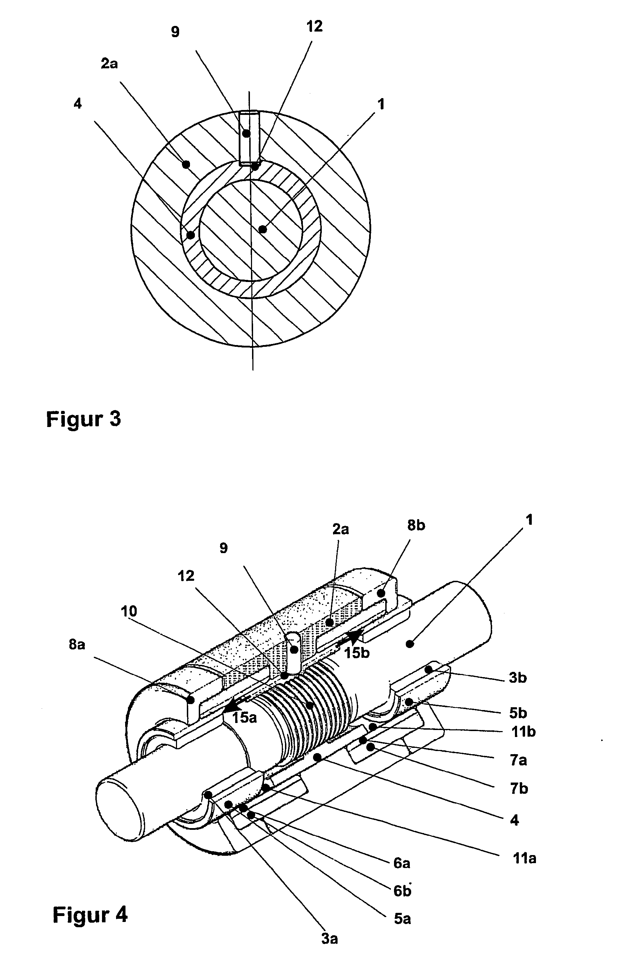

- Fig. 3: ein Querschnitt durch den Sensor im Zentrum entlang B / B von Fig. 2
- Fig. 4: eine räumliche Darstellung in Längsrichtung aufgeschnitten der Sensoranordnung entsprechend Fig. 2
- Fig. 5: schematische Darstellung der Sensoranordnung nach Fig. 2 mit transformatorisch angeordneten Wicklungen und eines bevorzugten Beispiels der elektrischen Beschaltung im Prinzip
- Fig. 6: eine Sensoranordnung in dreidimensionaler und Explosions-Darstellung der Montagereihenfolge

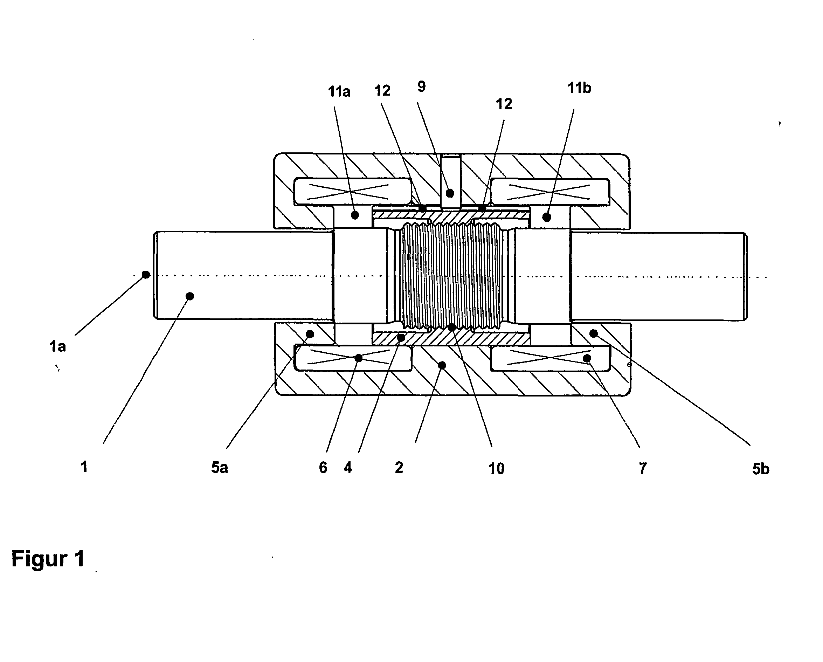

Der Drehwinkelsensor ist koaxial um eine drehbare Welle 1 mit der Wellenachse 1a angeordnet und sehr kompakt aufgebaut, wie dies in der Fig. 1 schematisch im Längsschnitt dargestellt ist. Auf einem Längenabschnitt der Welle 1 ist ein Aussengewindeabschnitt 10 an der Welle angeordnet, auf welchen eine in Wellenachsrichtung bewegliche Gewindemutter 4 positioniert ist. Ein feststehendes Gehäuse 2 umschliesst die Welle 1 mit dem Aussengewindeabschnitt 10 und der darauf angeordneten Gewindemutter 4. Die Gewindemutter 4 ist gegenüber dem Gehäuse 2 verdrehsicher fixiert, derart dass die Gewindemutter 4 bei Verdrehung der Welle 1 nicht mitdrehen kann und beim Verdrehen der Welle 1 eine translatorische, lineare Bewegung 15a, b entlang der Welle 1 ausführt. Die Aussparungen mit den Wicklungen 6, 7 sind vorzugsweise im wesentlichen symmetrisch zur zentralen Querschnittsebene des Wellenaussengewindeabschnittes angeordnet. Beim Links- oder Rechtsdrehen der Welle 1 bewegt sich somit die Mutter weiter in den Bereich der einen Wicklungen oder weiter in den Bereich der anderen Wicklung, wodurch die beiden Wicklungen eine tauchspulenartige Funktion erfüllen. Das Gehäuse 2 weist auf der inneren gegen die Welle 1 gerichteten Seite im Gehäuseendbereich zwei ringförmige Gehäuseteile 5a, 5b auf, welche eine Art ringförmige, die Welle 1 umschliessende Pole ausbilden und die Wicklungen 6, 7 mindestens teilweise nicht überdecken. Mindestens ein Teil der Gewindemutter 4 liegt hierbei zwischen diesen Polartigen Gehäuseteilen 5a, 5b, so dass zwischen diesen und der Gewindemutter 4 beidseitig je ein in der Breite varierbarer Luftspalt 11a, 11b ausgebildet wird. Durch das Verdrehen der Welle 1 in die eine Richtung wird einer der Luftspalte 11a, 11b verkleinert und der andere gleichzeitig vergrössert. Durch Drehen der Welle 1 in die andere Richtung wird der Vorgang umgekehrt. Bei Verdrehen der Welle 1 aus der ursprünglichen zentralen Lage wird somit die Gewindemutter 4 derart verschoben, dass stets einer der beiden Luftspalte 11a, 11b entsprechend den eingenommenen Positionen grösser ist und der andere der beiden Luftspalte kleiner ist.

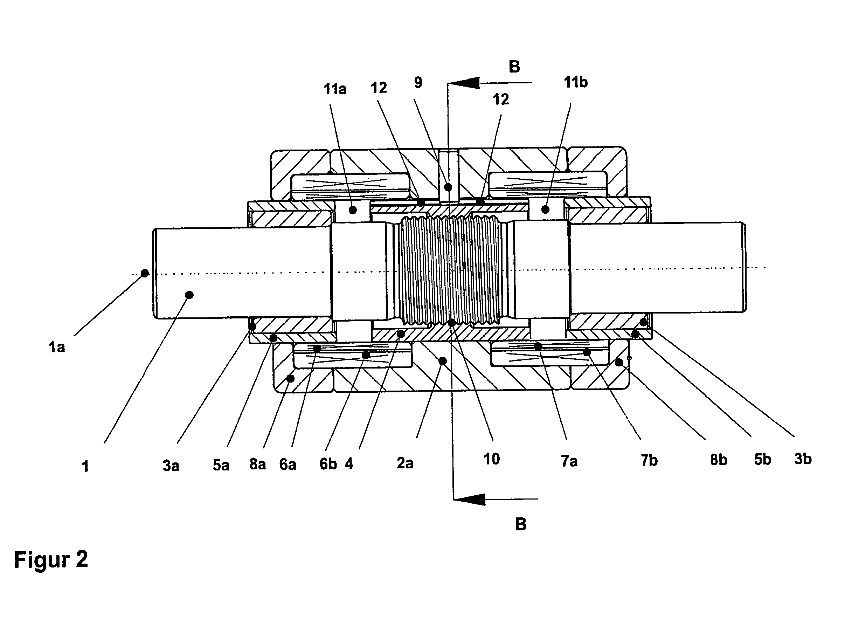

Wie in Fig. 1 und den weiteren Figuren dargestellt ist, wird die Gewindemutter 4 im Aussenbereich, wo die Luftspalte 11a, 11b bestimmt werden, vorzugsweise hülsenförmig ausgebildet. Die Gewindemutter 4 enthält vorzugsweise metallisches Material, wobei zumindest im Hülsenbereich dieses Material mit Vorteil ein ferromagnetisches und / oder ferrimagnetisches Material enthält. Vorzugsweise werden hierbei Materialien wie Weicheisen und / oder Ferrite verwendet, insbesondere aber Weicheisen. Das innere Gehäuseteil besteht mit Vorteil aus zwei Hülsenteilen 5a und 5b, welche die beiden Luftspalte 11a, 11b an den beiden Gehäuseendbereichen begrenzen. Die beiden Luftspalte 11a, 11b werden somit durch die beiden hülsenförmigen inneren Gehäuseteile 5a, 5b gegenüber der dazwischen liegenden Gewindemutter 4 ausgebildet, welche koaxial entlang der Welle angeordnet sind, wie dies in Fig. 2 dargestellt ist.

Es ist von Vorteil, dass die Hülsen 5a, 5b ferromagnetisches und /oder ferrimagnetisches Material enthalten wie Weicheisen und / oder Ferrit, vorzugsweise aber Weicheisen. Es ist ausserdem weiterhin vorteilhaft, dass das ganze Gehäuse 2, welches die Wicklungen 6, 7 umschliesst, ferromagnetisches und /oder ferrimagnetisches Material enthalten wie Weicheisen und / oder Ferrit und dieses vorzugsweise als ganzes aus Weicheisen besteht. Hierdurch wird der magnetische Kreis optimal ausgebildet und die Wirkung beim Verstellen der Luftspaltbreiten 11a, 11b entsprechend erhöht. Ausserdem werden die Wicklungen 6, 7 von äusseren Störeinflüssen abgeschirmt. Es ist auch möglich im magnetischen Kreis zusätzlich Permanentmagnete anzuordnen um den Aufbau und / oder den Wirkungsgrad zu erhöhen.

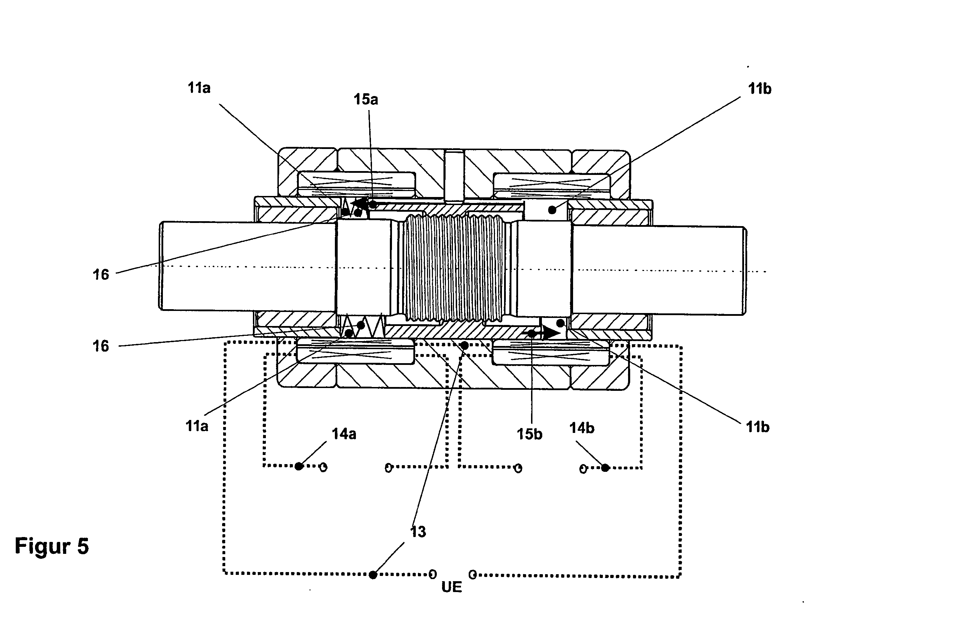

Jede der beiden Wicklungen 6, 7 innerhalb der Aussparungen des Gehäuse 2 können mehrere Wicklungen, vorzugsweise mindestens zwei getrennte Wicklungen 6a, 6b, 7a, 7b, enthalten und hierdurch innerhalb jeder Aussparung eine Transformatoranordnung bilden, wie dies in Fig. 2 dargestellt ist. Hierdurch kann die Signalstärke der Sensoranordnung zusätzlich verbessert werden und auch der elektronische Messaufbau optimiert werden. Eine derartige Anordnung mit elektrischer Beschaltung ist schematisch in Fig. 5 dargestellt.

Eine bevorzugte Beschaltung liegt darin, dass je eine Wicklung 6a, 7a der beiden Aussparungen in Serie geschaltet werden und einen Erregerwicklungsstromkreis 13 bilden. Die beiden anderen Wicklungen 6b, 7b in den Aussparungen werden separat als Sensorspulenstromkreise 14a, 14b heraus geführt und zur Signalauswertung einer elektronischen Schaltung zugeführt, welche einem Drehwinkel zugeordnet wird. Durch die Variation der Luftspaltbreiten 11a, 11b kann mit elektronischen Mitteln die Änderung der Spuleninduktivitäten und / oder Impedanzänderung der Spulen elektronisch gemessen werden und entsprechend ausgewertet werden. Dies kann bereits mit Einzelwicklungsanordnungen für jede Aussparung realisiert werden, wobei aber die vorerwähnte Transformatorenanordnung 6a, 6b, 7a, 7b Vorteile aufweist in Bezug auf die Signalauswertung. Die Signalauswertung kann bei der vorliegenden erfinderischen Anordnung auf einfache Weise derart erfolgen, dass durch das gegensinnige Verhalten der Wicklungen 6, 7 die Signalamplitude verstärkt wird und zusätzlich mechanische Abweichungen und / oder unerwünschte Temperaturverschiebungen mindestens teilweise ausgeglichen bzw. kompensiert werden. Hierdurch wird die Sensitiviät und die Präzision der Messung mit einfachen Mitteln erhöht. Besonders einfach kann dies realisiert werden durch Verwendung der Transformatoranordnung mit mindestens zwei Wicklungen pro Aussparung bei entsprechender Beschaltung unter Beachtung des Wicklungssinnes der verwendeten Spulen.

Um die Präzision der Messung zusätzlich zu erhöhen, sollte darauf geachtet werden, dass zwischen Gewindemutter 4 und dem Wellenaussengewindeabschnitt 10 das Spiel minimal gehalten wird. Dies kann dadurch erreicht werden, dass beispielsweise die Gewindemutter 4 mit einem Federelement 16 gegenüber dem Aussengewinde des Wellenaussengewindeabschnittes 10 verspannt wird. Dies kann beispielsweise dadurch bewirkt werden, dass in axialer Richtung zwischen Gehäuse 2 bzw. einem inneren Gehäuseteil 5a, 5b und der Gewindemutter 4 bzw. deren Hülse ein Federelement 16 zur Vorspannung angeordnet wird. Es ist allerdings auch möglich, eine radiale Verspannung der Gewindemutter mit dem Wellenaussengewindeabschnitt 10 zu erzeugen, beispielsweise mit federelastischen Ausbildungen im Gewindebereich.

Für die praktische Ausführung der Drehwinkelsensoranordnung wird die Welle 1 gegenüber dem Gehäuse 2 beidseitig mit den Lagern 3a, 3b gelagert, wie dies in Fig. 2 und den weiteren Figuren dargestellt ist. Vorteilhafterweise wird das Gehäuse 2 in verschiedene Teile aufgeteilt zur Vereinfachung der Montage. Vorzugsweise weist das Gehäuse 2 ein mittleres äusseres Gehäuseteil 2a auf, welches beidseitig durch die beiden Deckelteile 8a, 8b abgeschlossen wird. Die beiden Deckelteile 8a, 8b sind gegen die Welle 1 hin mit den beiden beidseitig angeordneten inneren Gehäuseteilen 5a, 5b abgeschlossen, welche vorzugsweise Polartig bzw. hülsenartig ausgebildet sind und beidseitig die beiden Luftspalte 11a, 11b der magnetischen Kreise begrenzen. Das äussere Gehäuseteil 2a sowie die beiden Deckelteile 8a, 8b weisen entsprechende Aussparungen auf für die Aufnahme der beiden Wicklungen 6, 7 oder zusätzlichen Wicklungen 6a, 6b, 7a, 7b.

Diese Anordnung lässt sich somit sehr kompakt und wirtschaftlich aufbauen. Das wird dadurch erreicht, dass die Komponenten der Reihe nach, ohne komplexe Vormontagen, zu der vollständigen Messeinrichtung verbaut werden können. Die Komponenten selbst sind einfach vorgefertigte Bauteile. Auch genügt für die Montage eine einfache Montageeinrichtung, die die Gehäuseteile und das eine Wellenende führt und die relativ geringen Einpresskräfte während der Montage aufnimmt.

Das bedeutet, dass der Sensor, der aus vorgefertigten Komponenten, wie zumindest:
einem ersten Deckelteil 8a einem ersten Lager 3a, einem ersten innerem Gehäuseteil 5a und einer ersten Wicklung 6 bzw. einem ersten Wicklungspaar 6a, 6b, einem äusseren Gehäuseteil 2a, einer Gewindemutter 4 sowie einem Wellenschaft 1, der einen Aussengewindeabschnitt 10 enthält, und weiter einer zweiten Wicklung 7 bzw. einem zweiten Wicklungspaar 7a, 7b, einem zweiten inneren Gehäuseteil 5b, einem zweiten Lager 3b sowie einem zweiten Deckelteil 8b besteht, mit zumindest diesen Komponenten in einer vorgebbaren Reihenfolge in einer Aufspannung montiert werden kann.

Hierbei wird derart vorgegangen, dass ein erstes Deckelteil 8a des Gehäuses 2 in eine hier nicht dargestellte Montagevorrichtung gelegt wird und anschliessend ein erstes Lager 3a und ein erstes inneres Gehäuseteil 5a in das Deckelteil 8a eingepresst wird und dann die erste Wicklung 6 bzw. das erste Wicklungspaar 6a, 6b in eine erste Aussparung des Deckelteils 8a eingelegt und danach das äussere Gehäuseteil 2a darüber geschoben und so eine erste Baugruppe gebildet wird. Im Anschluss wird die aus Gewindemutter 4 und Welle 1 durch in etwa zentrisches Verschrauben im Wellenaussengewindeabschnitt 10 gebildete Baugruppe in die erste Baugruppe eingepresst, wobei die Welle 1 im Lager 3a gehalten wird. Anschliessend wird die Verdrehsicherung 9 in das Gehäuseteil 2a eingeführt, wobei ggf. durch eine hier nicht dargestellte Vorrichtung die Gewindemutter 4 in einer vordefinierten Drehlage gehalten wird. Danach wird die zweite Wicklung bzw. das zweite Wicklungspaar 7a, 7b über die Welle 1 geschoben und in der Aussparung des Gehäuseteils 2a positioniert. Danach wird das zweite Deckelteil 8b über die derart vormontierten Komponenten geschoben und zum Abschluss das zweite Lager 3b mit dem Gehäuseteil 5b über die Welle 1 geschoben und in das zweite Deckelteil 8b eingepresst. Alternativ wird das zweite Deckelteil 8b mit dem zweiten Gehäuseteil 5b und dem zweiten Lager 3b verpresst und als gesamte Baugruppe über die übrigen bereits vormontierten Komponenten geschoben.

Für den Fall, dass ein Federelement 16 in die Messeinrichtung integriert werden soll, kann dieses auf einfach Weise unmittelbar vor dem Einführen der Welle 1 in die Baugruppe in diese eingeschoben werden.

Bei der Montage werden die Wicklungen in einer Drehlage in die Aussparungen des Gehäuseteils 2a bzw. der Deckelteile 8a, 8b positioniert, dass die Drahtenden zur Kontaktierung durch entsprechend vorgefertigte Aussparungen in diesen Komponenten geführt werden.

Die elektrische Kontaktierung erfolgt dann entweder direkt im Anschluss an das Verbauen der Baugruppe oder erst beim Einbau am Messort, beispielsweise im Lenksystem. Dabei kann sowohl ein Stecker Verwendung finden oder auch direkt eine Elektronische Signalauswerteeinheit fest mit der Messeinrichtung verbunden werden. Die derart verbundene Messeinrichtung braucht dann nur einen Anschluss für eine Stromversorgung und einen Signalausgang für das Winkelmessergebnis aufzuweisen. Der Vorteil einer derartigen kompakten Anordnung besteht darin, dass die Kalibration direkt durchgeführt werden kann, so dass fertig kalibrierte Messeinheiten ausgeliefert werden können.

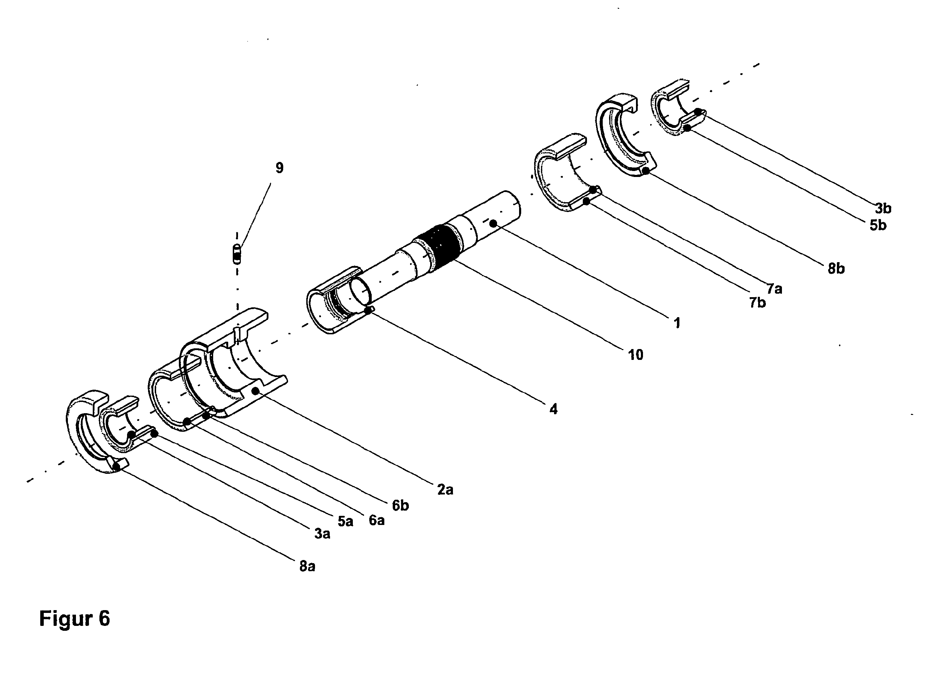

Das Vorgehen der Montagereihenfolge ist in der dreidimensionalen Explosionsdarstellung in Fig. 6 weiter verdeutlicht. Eine derartige kompakte und wirtschaftlich zu realisierende Anordnung ist speziell geeignet für die Anwendung bei Lenkanordnungen für Motorkraftfahrzeuge. Beispielsweise ist hierbei die Welle 1 die Lenkspindel und wird mit maximal 3 bis 4 Umdrehungen aus der Mittellage in jede Richtung beim Steuerungsvorgang verdreht. Die Gewindemutter 4 wird hierbei bei maximaler Umdrehungszahl in einem Bereich von 0,07 bis 1,5 mm in die jeweilige Richtung axial verschoben. Die Steigung des Aussengewindes 10 an der Welle 1 und des Innengewinde der Gewindemutter 4 sind dementsprechend ausgelegt. Der Luftspalt 11a wird entsprechend dieser axialen Bewegung maximal um nur 0,5 bis 1,5 mm verkleinert und der Spalt 11b entsprechend gleichzeitig maximal um 0,5 bis 1,5 mm vergrössert oder umgekehrt. An den Erregerspulen 6a, 7a der bevorzugten Transformatorausbildung entsprechend Fig. 5 wird über den Erregerstromkreis 13 eine Erregerspannung UE mit einer Trägerfrequenz von beispielsweise einigen Kilohertz angelegt, wie etwa 10 kHz, vorzugsweise über der menschlichen Hörgrenze, etwa grösser 16 kHz.

In den beiden Sensorspulenkreisen 14a, 14b wird eine entsprechende Messspannung, deren Wert von den Luftspaltbreiten 11a bzw. 11b abhängt, gemessen und elektronisch ausgewertet und einem Drehwinkel zugeordnet. Die Anordnung kann auch kombiniert werden mit einer Torsionsmessanordnung zur Messung der Lenkkräfte, was bei Lenkhilfeanordnungen besonders vorteilhaft ist. Beispielsweise kann die derart gebildete Messanordnung in einem Lenksystem in der Art verbaut werden, dass die Welle 1 in analoger Weise zu einem herkömmlichen Torsionsstab mit der Lenkspindel drehfest verbunden wird und das Gehäuse 2 an entsprechenden karrosseriefesten Halterungen befestigt wird. Dabei werden die Luftspalte 11a, 11b möglichst genau gleich gross eingestellt. Danach erfolgt der elektrische Anschluss und die Kalibration des Systems.

## Patentansprüche

1. Drehwinkelsensor koaxial angeordnet an einer drehbaren Welle (1) mit deren Wellenachse (1a), die einen Aussengewindeabschnitt (10) enthält und mit einer auf diesem Aussengewindeabschnitt (10) in Wellenachsrichtung beweglich angeordneten, zumindest teilweise metallischen, Gewindemutter (4) welche koaxial von einem Gehäuse (2) umfasst werden, wobei die Gewindemutter (4) gegenüber dem Gehäuse (2)verdrehsicher angeordnet ist, **dadurch gekennzeichnet, dass** das Gehäuse (2) in Richtung der Wellenachse (1a) mindestens zwei die Welle (1) umschliessende, ringförmige Aussparungen aufweist, welche je eine elektrische Wicklung (6,7) enthalten und dass das Gehäuse (2) zwei innere gegen die Welle (1) gerichtete ringförmige Gehäuseteile (5a, 5b) aufweist, die die Wicklungen (6,7) mindestens teilweise nicht überdecken, wobei mindesten ein Teil der Gewindemutter (4) zwischen den Gehäuseteilen (5a, 5b) derart angeordnet ist, dass zwischen den Gehäuseteilen (5a, 5b) und der Gewindemutter (4) beidseitig je ein in der Breite varierbarer Luftspalt (11a, 11b) ausgebildet ist.

2. Drehwinkelsensor nach Anspruch 1, **dadurch gekennzeichnet, dass** der Sensor aus vorgefertigten Komponenten, wie zumindest: einem ersten Deckelteil (8a) einem ersten Lager (3a), einem ersten innerem Gehäuseteil (5a) und einer ersten Wicklung (6) bzw. einem ersten Wicklungspaar (6a, 6b), einem äusseren Gehäuseteil (2a), einer Gewindemutter (4) sowie einem Wellenschaft (1), der einen Aussengewindeabschnitt (10) enthält, und weiter einer zweiten Wicklung (7) bzw. einem zweiten Wicklungspaar (7a, 7b), einem zweiten inneren Gehäuseteil (5b), einem zweiten Lager (3b) sowie einem zweiten Dekkelteil besteht , und die Montage zumindest dieser Komponenten in einer vorgebbaren Reihenfolge in einer Aufspannung durchführbar ist.

3. Drehwinkelsensor nach Anspruch 1 oder 2, **dadurch gekennzeichnet, dass** bei Verdrehung der Welle (1) die Gewindemutter (4) entlang der Wellenachse eine geänderte Position einnimmt, derart dass die geänderte Position im Vergleich zur vorhergehenden Position stets zu einer Vergrösserung des einen der beiden Luftspalte (11a, 11b) führt und gleichzeitig stets zu einer Verkleinerung des anderen der beiden Luftspalte (11a, 11b) führt.

4. Drehwinkelsensor nach einem der Ansprüche 1 bis 3, **dadurch gekennzeichnet, dass** das innere Gehäuseteil (5) aus zwei metallischen Hülsen (5a, 5b) ausgebildet ist welche die beiden Luftspalte (11a, 11b) ausgebildet gegenüber der Gewindemutter(4) begrenzen.

5. Drehwinkelsensor nach Anspruch 4, **dadurch gekennzeichnet, dass** die Hülsen (5a, 5b) und die Gewindemutter (4) ferromagnetisches und / oder ferrimagnetisches Material enthalten, wie Weicheisen und / oder Ferrit, vorzugsweise Weicheisen.

6. Drehwinkelsensor nach einem der Ansprüche 1 bis 5, **dadurch gekennzeichnet, dass** das Gehäuse (2) ferromagnetisches und / oder ferrimagnetisches Material enthalten, wie Weicheisen und / oder Ferrit, vorzugsweise Weicheisen.

7. Drehwinkelsensor nach einem der Ansprüche 1 bis 6, **dadurch gekennzeichnet, dass** die Gewindemutter (4) mindestens im äusseren Umfang als zylinderförmige Hülse ausgebildet ist und die Luftspalte (11a, 11b) begrenzt.

8. Drehwinkelsensor nach Anspruch 7, **dadurch gekennzeichnet, dass** die Gewindemutterhülse (4) mindestens im Luftspaltbereich ferromagnetisches und / oder ferrimagnetisches Material enthält, wie Weicheisen und / oder Ferrit, vorzugsweise Weicheisen.

9. Drehwinkelsensor nach einem der Ansprüche 1 bis 8, **dadurch gekennzeichnet, dass** die Gewindemutter (4) gegenüber dem feststehenden Gehäuse (2) mit einem Federelement (16) in radialer oder vorzugsweise in axialer Richtung abgestützt ist.

10. Drehwinkelsensor nach einem der Ansprüche 1 bis 9, **dadurch gekennzeichnet, dass** die beiden Wicklungen (6, 7) aus je mindestens zwei getrennte Wicklungen (6a, 6b, 7a, 7b) enthalten und hierdurch je eine Transformatoranordnung bilden.

11. Drehwinkelsensor nach einem der Ansprüche 1 bis 10, **dadurch gekennzeichnet, dass** die Wicklungen (6,6a,6b, 7,7a,7b) mit einer Messauswertelektronik verbunden sind zur Messung der Induktivitätsänderung und / oder der Impedanzänderung der Wicklungsanordnung.

12. Drehwinkelsensor nach Anspruch 11, **dadurch gekennzeichnet, dass** die Messwertelektronik eine Schaltungsanordnung zur Drehwinkelzuordnung aufweist.

13. Drehwinkelsensor nach einem der Ansprüche 1 bis 12, **dadurch gekennzeichnet, dass** dieser in ein Lenkhilfesystem für Motorkraftfahrzeuge eingebunden ist.

14. Verfahren zur Herstellung eines Drehwinkelsensors nach einem der Ansprüche 1 bis 11, **dadurch gekennzeichnet, dass** ein erstes Deckelteil (8a) des Gehäuse (2) in eine Montagevorrichtung gelegt wird und anschliessend ein erstes Lager (3a) und ein erstes inneres Gehäuseteil (5)a in das Deckelteil (8a) eingepresst wird und dann die erste Wicklung 6 bzw. das erste Wicklungspaar (6a,b) in eine erste Aussparung des Deckelteils (8a) eingelegt und danach das äussere Gehäuseteil (2a) darüber geschoben wird und im Anschluss wird die Welle (1) über deren Wellenaussengewindeabschnitt (10) die Gewindemutter (4) geschraubt ist eingepresst, wobei die Welle (1) im Lager (3a) gehalten wird und danach wird die zweite Wicklung bzw. das zweite Wicklungspaar (7a, 7b) über die welle 1 geschoben und in der Aussparung des Gehäuseteils (2a) positioniert und anschliessend wird das zweite Deckelteil (8b) übergeschoben und daran abschliessend wird das zweite Lager (3b) mit dem Gehäuseteil (5b) über die Welle (1) geschoben und in das zweite Deckelteil (8b) eingepresst.

15. Verfahren zur Messung eines Drehwinkels mit dem Drehwinkelsensor nach einem der Ansprüche 1 bis 11, **dadurch gekennzeichnet, dass** an den Wicklungen (6, 7),insbesondere durch Wicklungen welche Transformatoranordnungen (6a,6b, 7a,7b) bilden, eine Induktivitätsänderung und / oder eine Impedanzänderung elektronisch gemessen wird und das Messsignal einem Drehwinkel zugeordnet wird.

16. Verfahren zur Messung eines Drehwinkels nach Anspruch 15, **dadurch gekennzeichnet, dass** die Impedanzänderung an den beiden Wicklungen (6,7) und / oder den beiden Transformatoranordnungen gebildet aus mindestens zwei Wicklungen (6a,6b 7a,7b) in einer Aussparung sich bezüglich der elektrischen Signalauswertung gegensinnig verhalten und dadurch mechanische Abweichungen und / oder unerwünschte Temperaturverschiebungen mindestens teilweise ausgeglichen bzw. kompensiert werden.

17. Verfahren zur Messung eines Drehwinkels mit dem Drehwinkelsensor nach einem der Ansprüche 12 bis 16, **dadurch gekennzeichnet, dass** mit dem Sensor der Drehwinkel einer Lenkwelle in einer Lenkhilfe für ein Motorkraftfahrzeug gemessen wird.

## Claims

1. An angle of rotation sensor coaxially arranged on a rotatable shaft (1) with its shaft axis (1a), that contains an outside threaded section (10) and with an at least partially metallic threaded nut (4) that is arranged on this outside threaded section (10) in such a manner that it can move in the direction of the shaft axis and that are coaxially surrounded by a housing (2), whereby the threaded nut (4) is arranged in a non-rotating manner opposite the housing (2), **characterized in that** the housing (2) comprises at least two annular recesses surrounding the shaft (1) in the direction of the shaft axis (1a), which recesses each contain an electrical winding (6, 7), and that the housing (2) comprises two inner annular housing parts (5a, 5b) directed against the shaft (1) that do not cover the windings (6, 7) at least in part, whereby at least a part of the threaded nut (4) is arranged between the housing parts (5a,5b) in such a manner that an air gap (11a, 11b) that can be varied in its width is formed between the housing parts (5a, 5b) and the threaded nut (4) on both sides.

2. The angle of rotation sensor according to claim 1, **characterized in that** the sensor consists of prefabricated components such as at least: a first cover part (8a), a first support (3a), a first inner housing part (5a) and a first winding (6) and a first winding pair (6a, 6b), respectively an outer housing part (2a), a threaded nut (4) and a shaft shank (1), that contains an outer threaded section (10), and furthermore a second winding (7) and a second winding pair (7a, 7b), respectively a second inner housing part (5b), a second support (3b) and a second cover part, and that the assembly of at least these components can be performed in a given sequence in one clamping.

3. The angle of rotation sensor according to claim 1 or 2, **characterized in that** when the shaft (1) rotates, the threaded nut (4) assumes a changed position along the shaft axis in such a manner that the changed position always leads to an enlargement of one of the two air gaps (11a, 11b) in comparison to the previous position and at the same time always leads to a diminution of the other one of the two air gaps (11a, 11b).

4. The angle of rotation sensor according to one of claims 1 to 3, **characterized in that** the inner housing part (5) is constructed from two metallic casings (5a, 5b) that delimit the two air gaps (11a, 11b) formed opposite the threaded nut (4).

5. The angle of rotation sensor according to claim 4, **characterized in that** the casings (5a, 5b) and the threaded nut (4) contain ferromagnetic and/or ferrimagnetic material such as soft iron and/or ferrite, preferably soft iron.

6. The angle of rotation sensor according to one of claims 1 to 5, **characterized in that** the housing (2) contains ferromagnetic and/or ferrimagnetic materials such as soft iron and/or ferrite, preferably soft iron.

7. The angle of rotation sensor according to one of claims 1 to 6, **characterized in that** the threaded nut (4) is constructed at least in its outer circumference as a cylindrical casing and delimits the air gaps (11a, 11b).

8. The angle of rotation sensor according to claim 7, **characterized in that** the threaded nut casing (4) contains ferromagnetic and/or ferrimagnetic materials such as soft iron and/or ferrite, preferably soft iron at least in the area of the air gap.

9. The angle of rotation sensor according to one of claims 1 to 8, **characterized in that** the threaded nut (4) is supported opposite the fixed housing (2) by a spring element (16) in the radial or preferably in the axial direction.

10. The angle of rotation sensor according to one of claims 1 to 9, **characterized in that** the two windings (6, 7) contain at least two separate windings (6a, 6b, 7a, 7b) and as a result each form a transformer arrangement.

11. The angle of rotation sensor according to one of claims 1 to 10, **characterized in that** the windings (6, 6a, 6b, 7, 7a, 7b) are connected to an electronic circuitry for evaluating measurements of the change of inductivity and/or of the change of impedance of the winding arrangement.

12. The angle of rotation sensor according to claim 11, **characterized in that** the electronic circuitry for evaluating measurements comprises a circuit arrangement for being associated with the angle of rotation.

13. The angle of rotation sensor according to one of claims 1 to 12, **characterized in that** it is incorporated in an auxiliary steering system for motor vehicles.

14. A method for the manufacture of an angle of rotation sensor according to one of claims 1 to 11, **characterized in that** a first cover part (8a) of the housing (2) is placed in an assembly device and subsequently a first support (3a) and a first inner housing part (5a) is pressed into the cover part (8a) and then the first winding 6 and the first winding pair (6a, b) respectively are pressed into a first recess of the cover part (8a) and then the outer housing part (2a) is inserted over them and subsequently the shaft (1), over whose outer shaft threaded section (10) the threaded nut (4) is screwed, is pressed in, whereby the shaft (1) is held in the support (3a) and thereafter the second winding and the second winding pair (7a, 7b) respectively are inserted over the shaft 1 and positioned in the recess of the housing part (2a), and subsequently the second cover part (8b) is inserted over them and subsequently the second support (3b) is inserted over the shaft (1) with the housing part (5b) and pressed into the second cover part (8b).

15. The method for measuring an angle of rotation with the angle of rotation sensor according to one of claims 1 to 11, **characterized in that** a change of inductivity and/or a change of impedance is/are measured electronically on the windings (6, 7), in particular through windings that form transformer arrangements (6a, 6b, 7a, 7b), and the measured signal is associated with an angle of rotation.

16. The method for measuring an angle of rotation according to claim 15, **characterized in that** the change of impedance on the two windings (6, 7) and/or on the two transformer arrangements formed from at least two windings (6a, 6b, 7a, 7b) in a recess behave in an opposing manner as concerns the electrical signal evaluation and as a result mechanical deviations and/or undesired temperature shifts are at least partially balanced or compensated.

17. The method for measuring an angle of rotation with the angle of rotation sensor according to one of claims 12 to 16, **characterized in that** the angle of rotation of a steering shaft is measured with the sensor in a steering aid for a motor vehicle.

## Revendications

1. Capteur d'angle de rotation disposé coaxialement sur un arbre rotatif (1) avec l'axe d'arbre (1a) de celui-ci qui contient une section à filetage extérieur (10), et avec un écrou (4) au moins en partie métallique et disposé mobile dans le sens de l'axe de l'arbre sur ladite section à filetage extérieur (10), qui sont entourés coaxialement par une enveloppe (2), étant précisé que l'écrou (4) est disposé fixe en rotation par rapport à l'enveloppe (2), **caractérisé en ce que** l'enveloppe (2) présente dans le sens de l'axe d'arbre (1a) au moins deux évidements annulaires qui entourent l'arbre (1) et qui contiennent chacun un enroulement électrique (6, 7), et **en ce que** l'enveloppe (2) présente deux éléments d'enveloppe intérieurs annulaires (5a, 5b) qui sont dirigés vers l'arbre (1) et qui, au moins en partie, ne recouvrent pas les enroulements (6, 7), étant précisé qu'une partie au moins de l'écrou (4) est disposée entre les éléments d'enveloppe (5a, 5b) de telle sorte qu'il se forme entre lesdits éléments d'enveloppe (5a, 5b) et l'écrou (4), de chaque côté, un interstice (11a, 11b) à largeur variable.

2. Capteur d'angle de rotation selon la revendication 1, **caractérisé en ce que** le capteur se compose de composants préfabriqués comme, au moins : un premier élément de couvercle (8a), un premier palier (3a), une premier élément d'enveloppe intérieur (5a) et un premier enroulement (6) ou une première paire d'enroulements (6a, 6b), un élément d'enveloppe extérieur (2a), un écrou (4), ainsi que d'une tige d'arbre (1) qui contient une section à filetage extérieur (10), et aussi d'un second enroulement (7) ou d'une seconde paire d'enroulements (7a, 7b), d'un second élément d'enveloppe intérieur (5b), d'un second palier (3b) ainsi que d'un second élément de couvercle, et le montage de ces composants, au moins, est apte à être réalisé dans un dispositif de serrage dans un ordre apte à être prédéfini.

3. Capteur d'angle de rotation selon la revendication 1 ou 2, **caractérisé en ce que** lors de la rotation de l'arbre (1), l'écrou (4) adopte le long de l'axe d'arbre une position modifiée, de telle sorte que ladite position modifiée entraîne toujours par rapport à la position précédente un agrandissement de l'un des deux interstices (11a, 11b) et en même temps entraîne toujours une réduction de l'autre interstice (11a, 11b).

4. Capteur d'angle de rotation selon l'une des revendications 1 à 3, **caractérisé en ce que** l'élément d'enveloppe intérieur (5) est formé de deux manchons métalliques (5a, 5b) qui limitent les deux interstices (11a, 11b) par rapport à l'écrou (4).

5. Capteur d'angle de rotation selon la revendication 4, **caractérisé en ce que** les manchons (5a, 5b) et l'écrou (4) contiennent un matériau ferromagnétique et/ou ferrimagnétique, comme le fer doux et/ou la ferrite, de préférence le fer doux.

6. Capteur d'angle de rotation selon l'une des revendications 1 à 5, **caractérisé en ce que** l'enveloppe (2) contient un matériau ferromagnétique et/ou ferrimagnétique, comme du fer doux et/ou de la ferrite, de préférence du fer doux.

7. Capteur d'angle de rotation selon l'une des revendications 1 à 6, **caractérisé en ce que** l'écrou (4) est conçu au moins dans la circonférence extérieure comme un manchon cylindrique et limite les interstices (11a, 11b).

8. Capteur d'angle de rotation selon la revendication 7, **caractérisé en ce que** le manchon d'écrou (4) contient au moins dans la zone des interstices un matériau ferromagnétique et/ou ferrimagnétique, comme du fer doux et/ou de la ferrite, de préférence du fer doux.

9. Capteur d'angle de rotation selon l'une des revendications 1 à 8, **caractérisé en ce que** l'écrou (4) est supporté par rapport à l'enveloppe fixe (2), dans un sens radial ou de préférence axial, avec un élément à ressort (16).

10. Capteur d'angle de rotation selon l'une des revendications 1 à 9, **caractérisé en ce que** les deux enroulements (6, 7) contiennent chacun au moins deux enroulements séparés (6a, 6b, 7a, 7b) et forment ainsi un dispositif transformateur.

11. Capteur d'angle de rotation selon l'une des revendications 1 à 10, **caractérisé en ce que** les enroulements (6, 6a, 6b, 7, 7a, 7b) sont reliés à une électronique d'analyse de mesure en vue de la mesure de la variation d'inductance et/ou de la variation d'impédance du dispositif à enroulements.

12. Capteur d'angle de rotation selon la revendication 11, **caractérisé en ce que** l'électronique d'analyse de mesure comporte un dispositif de commutation pour l'affectation d'angle de rotation.

13. Capteur d'angle de rotation selon l'une des revendications 1 à 12, **caractérisé en ce qu'**il est intégré dans un système de direction assistée pour véhicules à moteur.

14. Procédé pour fabriquer un capteur d'angle de rotation selon l'une des revendications 1 à 11, **caractérisé en ce qu'**un premier élément de couvercle (8a) de l'enveloppe (2) est placé dans un dispositif de montage, puis un premier palier (3a) et un premier élément d'enveloppe intérieur (5a) sont enfoncés dans l'élément de couvercle (8a) et le premier enroulement (6) ou la première paire d'enroulements (6a, b) est ensuite placé dans un premier évidement de l'élément de couvercle (8a), après quoi l'élément d'enroulement extérieur (2a) est enfilé pardessus, et l'arbre (1) sur la section à filetage extérieur (10) duquel l'écrou (4) est vissé est ensuite enfoncé, étant précisé que l'arbre (1) est maintenu dans le palier (3a), puis le second enroulement ou la seconde paire d'enroulements (7a, 7b) est enfilé sur l'arbre (1) et est positionné dans l'évidement de l'élément d'enveloppe (2a), puis le second élément de couvercle (8b) est enfilé pardessus et le second palier (3b) est ensuite enfilé avec l'élément d'enveloppe (5b) sur l'arbre (1) et est enfoncé dans le second élément de couvercle (8b).

15. Procédé pour mesurer un angle de rotation avec le capteur d'angle de rotation selon l'une des revendications 1 à 11, **caractérisé en ce qu'**au niveau des enroulements (6, 7), en particulier grâce à des enroulements qui forment des dispositifs transformateurs (6a, 6b, 7a, 7b), une variation d'inductance et/ou une variation d'impédance sont mesurées par voie électronique et le signal de mesure est affecté à un angle de rotation.

16. Procédé pour mesurer un angle de rotation selon la revendication 15, **caractérisé en ce que** la variation d'impédance au niveau des deux enroulements (6, 7) et/ou des deux dispositifs transformateurs formés d'au moins deux enroulements (6a, 6b, 7a, 7b) se comporte en sens inverse dans chaque évidement par rapport à l'analyse de signal électrique, et des écarts mécaniques et/ou des décalages de température indésirables sont ainsi au moins en partie équilibrés ou compensés.

17. Procédé pour mesurer un angle de rotation avec le capteur d'angle de rotation selon l'une des revendications 12 à 16, **caractérisé en ce qu'**avec le capteur est mesuré l'angle de rotation d'un arbre de direction dans une direction assistée pour un véhicule à moteur.
